# EUROPEAN PATENT APPLICATION

(11) **EP 1 153 855 A2**
(43) Date of publication of application: **14.11.2001**
(21) Application number: 01201325.6
(22) Date of filing: 11.04.2001
(51) Int. Cl.: B65F 1/14, B62B 3/00

(54) **Method and system for collecting and transporting special waste, in particular hospital waste, and a cart and container for use therein**

(30) Priority: 14.04.2000 NL 1014954
(71) Applicant: Van Egmond Technische Handelsonderneming B.V., 3861 RH Nijkerk (NL)
(72) Inventor: Versluis, Evert Cornelis Antonie, 3862 WL Nijkerk (NL)
(74) Representative: Metman, Karel Johannes

(57) **Abstract**

The invention relates to a method for collecting and transporting special waste, in particular hospital waste. Waste is collected in containers (H) at various locations, after which a number of containers are put together on a carrier and transported by means of vehicle to a discharging location, in particular an incinerator. At the incinerator the carrier is removed from the vehicle and the containers are unloaded from the carrier. A cart (A) which has been approved for transport by road of hazardous materials is used as said carrier, which cart is disinfected after being unloaded and returned to the location of use.

The invention furthermore relates to a system for transporting special waste, and also to a cart and container that can be used therewith.

## Description

The invention relates to a method for collecting and transporting special waste, in particular hospital waste, wherein waste is collected in containers at various locations, after which a number of containers are put together on a carrier and transported by means of vehicle to a discharging location, in particular an incinerator, where the cart is removed from the vehicle and the containers are unloaded from the cart.

Such a method is already known in practice. With the prior art method, empty containers provided with a special hallmark for transport by road of hazardous materials are delivered at the location of use, in this case hospitals. At said location, the containers are internally distributed. At the various locations of use, the containers are filled with the waste, and once the container is full, it is closed. The containers are so designed that they can be fully sealed by means of a special seal. Then the containers are collected and stacked on pallets (or in sea containers in the case of large hospitals) at a central point. Periodically a number of pallets or sea containers is collected by a waste collecting company and transported to an incinerator. At the incinerator, the containers are unloaded by hand from the pallets or from the sea containers one by one and placed on a feed belt of the incinerator, after which they are incinerated in the incinerator.

The object of the invention is to provide an improved method.

In order to accomplish that objective, the method according to the invention is characterized in that a cart which has been approved for transport by road of hazardous materials is used as the carrier, which cart is disinfected after being unloaded and returned to the location of use.

Since this method employs a cart designed as a "packaging" means of transport provided with the required hallmark, it is possible to use cheaper containers, for example containers not provided with a seal and/or made of cheaper materials.

Furthermore, the use of the cart makes it possible to save on handling costs, in particular with regard to the loading and unloading of the cart.

After the cart has been disinfected, empty containers can be placed into the cart, after which the carts filled with empty containers can be returned to the location of use.

In this manner a closed distribution chain is formed between the location of use and the location of discharge.

The invention also relates to a system for collecting and transporting special waste, in particular hospital waste, which system according to the invention is characterized by containers for collecting the waste and at least one cart which has been approved for transport by road of hazardous materials, into which a number of containers can be placed, wherein the cart includes a rectangular bottom fitted with wheels and two opposed side walls, a rear wall and an open, closable loading side, as well as at least one platform, wherein the interior space of the cart is so arranged and dimensioned that a predetermined number of containers fits in the cart with a slight play, and that each container is supported on the bottom or on a platform.

It is possible to use relatively simple containers with this system, because the containers can be firmly accommodated in the approved cart, whereby the cart is used as the outer package of the containers, as it were, which containers function as inner packages for the waste.

It is advantageous thereby if the rear wall of the cart includes a number of openings corresponding to the number of containers to be accommodated in the cart, which openings are arranged in line with the spaces for the containers, but whose surface area is smaller than the vertical sectional area of the containers.

This combination of containers and one or more carts provides a system which makes for an efficient collection and transport while keeping the handling costs low. The special openings in the rear wall of the carts enable automated unloading of the container in that a pusher element is capable of engaging the containers through the openings and transfer said containers from the cart to a transport element, such as a conveyor belt.

The invention also relates to a container for collecting and transporting special waste, in particular hospital waste, comprising a closable outer box, preferably of cardboard, a plastic internal liner of the outer box, as well as an inner box to be placed inside said liner. According to the invention, the inner box is made of waterproof, solid, preferably unpierceable cardboard, so that a relatively inexpensive but nevertheless sufficiently safe container is obtained, which can be safely transported in the above-described cart.

The invention will now be explained in more detail with reference to the drawings, which show an exemplary embodiment of the invention.

Fig. 1 is a perspective view of a cart according to the invention.

Fig. 2 is a side view of a platform from the cart according to Fig. 1.

Fig. 3 is a top plan view of the platform according to Fig. 2.

Fig. 4 is a bottom view of the platform according to Fig. 2, wherein only the wires on the underside of the platform are shown.

Fig. 5 is a rear view of the cart according to Fig. 1.

Fig. 6 schematically shows the container-filled cart according to the invention as it is being unloaded in an incinerator.

The drawings show a mobile container or cart A for transporting special waste, in particular hospital waste, comprising a rectangular bottom 1 with four wheels 2, two wheels of which, for example the ones on the short side, are castors. Three upright side walls 3, 4 and 5 join the bottom 1, whilst an upper wall 6 closes the cart on the upper side. The two opposed side walls 3, 5, together with bottom 1 and upper wall 6, define an open loading side 7. The various walls of the cart are formed of hollow tubes and threaded rods.

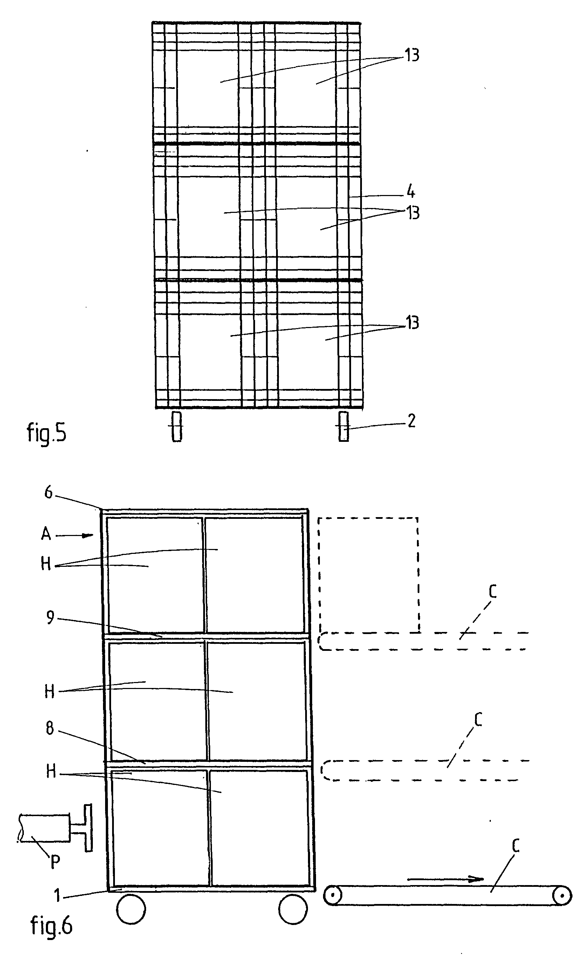

In the illustrated embodiment, the cart furthermore comprises two platforms 8 and 9. The distance between the upper side of the bottom 1 and the underside of the platform 8 thereabove, as well as the space between the elements disposed thereabove has been selected so that a container H (see Fig. 6) fits therein with a slight play. The inner dimension of the cart A is precisely adapted, also in lateral direction and in depth direction of said cart A, to the dimension of the containers H that are to be transported. In this case, bottom 1 and platforms 8 and 9 are each capable of accommodating two containers in either direction, so that a total of twelve containers H can be accommodated in cart A, in such a manner that there will be no risk of falling over, either during transport in cart A or during the loading and unloading of containers H.

The open loading side 7 of cart A can be protected by means of carrier straps or tensioning belts 10, which may be fitted in the middle of the spaces for the containers, for example. Alternatively, a door which swings on a vertical hinge is mounted in the open loading side 7, which door can be opened through an angle of 270 degrees, so that it can abut against one of the side walls 3, 5.

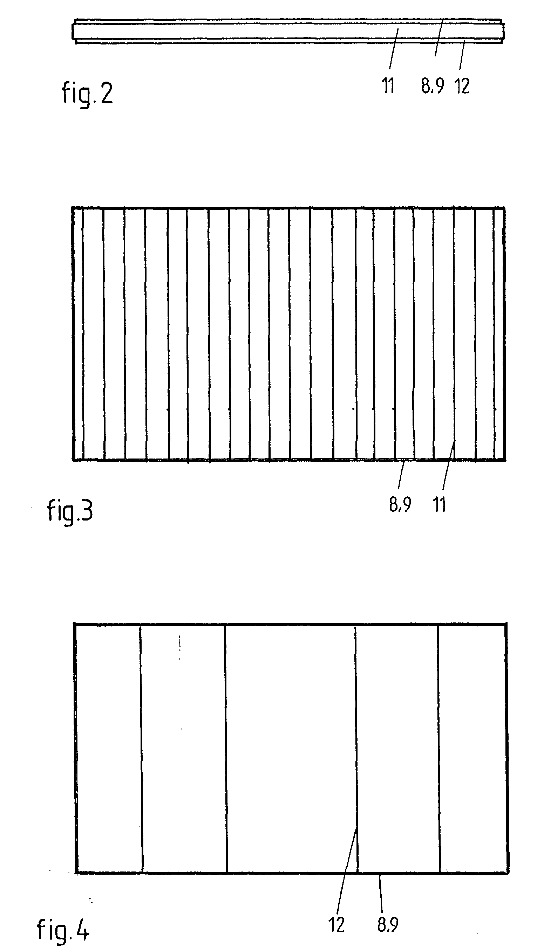

Figs. 2 and 4 show the construction of one of the platforms 8, 9, whereby it should be considered that the upper side of the bottom 1 and the underside of upper wall 6 may be identical to the upper side and the underside, respectively, of a platform 8, 9. As the figures show, the upper side of platform 8, 9 comprises a large number of parallel wires 11, on which the containers H can be supported, which wires extend in a direction towards and away from loading side 7, so that the longitudinal direction of wires 11 extends parallel to the direction in which containers H are loaded and unloaded. As a result, a container may easily slide on the bottom 1 and the platforms 8, 9, respectively, which are free of obstacles and which facilitates the introduction and removal of the containers H. The undersides of platforms 8, 9 and upper wall 6 comprise a smaller number of parallel guide wires 12, in this case two for each container space, which function to guide containers H on the upper side as well when the upper sides of said containers H come into contact with the underside of a platform 8, 9 or with the upper wall 6. This will prevent a container H from getting wedged upon being loaded or unloaded.

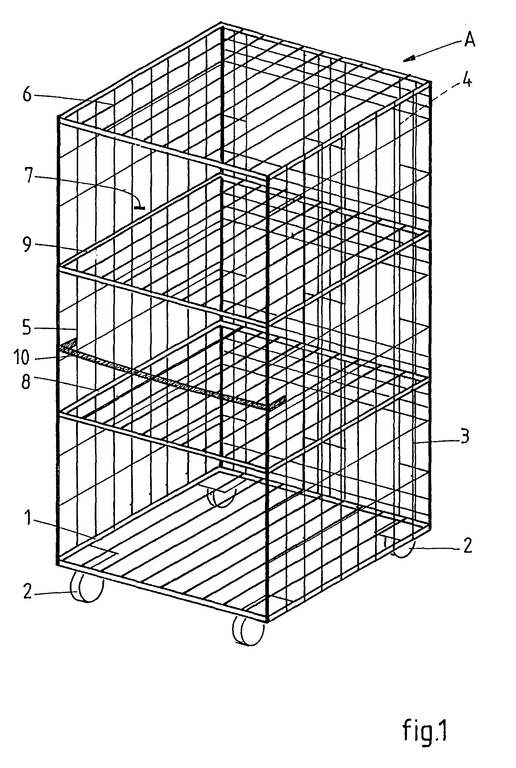

Figs. 1 and 6 show yet another aspect of the invention, viz. the ejector openings 13 in the rear wall 4 of cart A. Said ejector openings 13 are disposed in line with each container space, wherein the area of openings 13 is smaller than the vertical sectional area of containers H, which prevents containers H from moving out through openings 13. Ejector openings 13 make it possible to eject containers H from cart A by means of the ejector element that is schematically indicated at P in Fig. 5. In this case a hydraulic or pneumatic cylinder-plunger assembly is used, but also other push-out or ejector elements are conceivable. If a pulling ejector were used, no ejector openings 13 would be required.

Fig. 5 shows that a cart A filled with full containers H is disposed at the end of a conveyor belt C of a waste incinerator, wherein conveyor belt C (or a support for cart A) is vertically adjustable, in such a manner that the upper side of conveyor belt C can be brought in line with the upper side of one of the platforms 8, 9 or bottom 1, so that the containers H that are present in cart A can be directly transferred from their position on bottom 1 or on platforms 8, 9 to conveyor belt C by means of the ejector element 14 that has been inserted into cart through one of the ejector openings 13, thus enabling automatic unloading of cart A.

The method according to the invention that is to be carried out with cart A and containers H can be described as follows.

A number of carts A filled with containers H is delivered to the hospital, and subsequently said carts A are taken to various delivery points within the hospital. The individual containers H are removed from cart A at said delivery points and distributed to the locations of use associated with said delivery point. The empty containers H may be directly exchanged for full containers H, so that the cart A is directly filled, or possibly after some time, with containers H in which waste has been collected. A number of carts A is collected at a loading site and loaded into a truck at some point in time. The truck transports the carts A with the full containers H present therein to a waste incinerator. the carts A are unloaded from the truck at that location and placed into a belt loading machine fitted with ejector element P. The full containers H are then automatically transferred to conveyor belt C, which transports the containers to the actual incinerator.

At the waste incineration plant the empty carts H are disinfected with a view to being reused, and subsequently said carts A are filled with new, empty containers H, after which a truck is loaded with said carts containing empty containers. Said truck will transport the carts back to the hospital again.

This is a highly efficient method, which reduces the number of operations to be carried out with containers H to a significant degree in comparison with existing methods. Since carts provided with a hallmark for transport by road of hazardous materials (the UN hallmark in the Netherlands) are used, containers H can be of relatively simple construction, because they function as inner packages of carts A, as it were, rather than as outer packages for the waste. This makes it possible to use containers H of much simpler design, for example not comprising a seal at the cover. Furthermore it is possible to use a cheaper material, such as an inexpensive plastic or cardboard/milk packaging material for waste not having sharp projections.

A container H to be used in the system according to the invention could be constructed as follows. Container H comprises an outer box, preferably of corrugated cardboard. The dimensions may be 30 x 40 x 50 cm, for example. The outer box has a bottom, side walls and a cover which can be opened and closed. An inner bag or liner of plastic material, in particular polyethylene, fits in said outer box. Finally, the container, in this embodiment thereof, comprises an inner box, which has a bottom, side walls and a closable cover. The inner box is made of a unpierceable and waterproof solid cardboard, preferably at least 75 g cardboard. In use, the three parts of the container are positioned one inside another. As soon as the inner box is full, the cover of the box, which is attached to a side walls of the inner box on one side, is closed, that is, it is placed over the filling opening. Then the inner bag is sealed by means of a sealing element, for example a sealing strip or the like. Finally, the (pivoted) cover of the outer box is placed thereover and locked in position. The container can now be placed into the cart. The container according to the invention is relatively inexpensive, but nevertheless a moisture-proof and unpierceable container is provided. Since it is possible to deliver the container to the location of use in the form of a plano, a considerable saving on transport costs can be realised in comparison with plastic containers.

The invention is not restricted to the above-described embodiments, which can be varied in several ways without departing from the scope of the invention. Thus the cart can be designed to have more or fewer platforms.

## Claims

1. A method for collecting and transporting special waste, in particular hospital waste, wherein waste is collected in containers at various locations, after which a number of containers are put together on a carrier and transported by means of vehicle to a discharging location, in particular an incinerator, where the carrier is removed from the vehicle and the containers are unloaded from the carrier, **characterized in that** a cart which has been approved for transport by road of hazardous materials is used as the carrier, which cart is disinfected after being unloaded and returned to the location of use.

2. A method according to claim 1, wherein the containers are removed from the cart and directly transferred to a conveyor by means of ejector elements.

3. A method according to claim 2, wherein the containers are ejected from the cart and pushed onto the conveyor by means of a pusher element.

4. A method according to claim 1, 2 or 3, wherein empty containers are placed into the cart after the cart has been disinfected, after which the cart filled with empty containers is returned to the location of use.

5. A system for collecting and transporting special waste, in particular hospital waste, **characterized by** containers for collecting the waste and at least one cart which has been approved for transport by road of hazardous materials, into which a number of containers can be placed, wherein the cart includes a rectangular bottom fitted with wheels and two opposed side walls, a rear wall and an open, closable loading side, as well as at least one platform, wherein the interior space of the cart is so arranged and dimensioned that a predetermined number of containers fits in the cart with a slight play, and that each container is supported on the bottom or on a platform.

6. A system according to claim 5, wherein the space between the upper side of the bottom and the underside of the platform of the cart and between the upper side of the platform and the underside of a platform disposed thereabove or of the upper walls is just large enough to accommodate a container.

7. A system according to claim 5 or 6, wherein the rear wall includes a number of openings corresponding to the number of containers to be accommodated in the cart, which openings are arranged in line with the spaces for the containers, but whose surface area is smaller than the vertical sectional area of the containers.

8. A system according to any one of the claims 5 - 7, wherein said containers are made of a plastic material and/or of cardboard.

9. A cart for transporting special waste, in particular hospital waste, which has been collected in containers, **characterized by** a rectangular bottom fitted with wheels and two opposed side walls, a rear wall and an open, closable loading side, as well as at least one platform disposed some distance above the bottom, wherein the rear wall includes a number of openings corresponding to the number of containers to be accommodated in the cart, which openings are arranged in line with the spaces for the containers, but whose surface area is smaller than the vertical sectional area of the containers.

10. A cart according to claim 9, wherein the upper side of the bottom and of the platform are adapted to facilitate the movement of the containers in a direction towards and away from the open loading side.

11. A cart according to claim 9, wherein the walls and the platform of the cart are made of threaded rods and said threaded rods extend from the upper side of the bottom and the platform in a direction towards and away from the open loading side.

12. A cart according to any one of the claims 8 - 10, wherein the underside of the platform and/or the side walls are fitted with guides, such as guide wires or the like.

13. A cart according to any one of the claims 8 - 10, wherein means are provided for closing the loading side, in particular elastic straps or a door swinging on a vertical hinge, for example, which can be opened through 270 degrees, for example.

14. A container for collecting and transporting special waste, in particular hospital waste, preferably for use in the system according to any one of the claims 1 - 8, comprising a closable outer box of cardboard, a plastic internal liner of the outer box, as well as an inner box to be placed inside said liner, **characterized in that** the inner box is made of waterproof, solid cardboard, which is preferably unpierceable cardboard.
